# EUROPÄISCHE PATENTSCHRIFT

(11) **EP 1 348 936 B1**
(45) Veröffentlichungstag und Bekanntmachung des Hinweises auf die Patenterteilung: **12.10.2011**
(21) Anmeldenummer: 02027487.4
(22) Anmeldetag: 11.12.2002
(51) Int. Cl.: G01F 1/58, G01F 1/60

(54) **Magnetisch-induktives Durchflussmessverfahren**
Magnetic inductive flow measuring method
Procédé de mesure de débit magnéto-inductif

(30) Priorität: 28.03.2002 DE 10214323
(43) Veröffentlichungstag der Anmeldung: 01.10.2003
(73) Patentinhaber: KROHNE MESSTECHNIK GMBH & CO. KG, 47058 Duisburg (DE)
(72) Erfinder: Brockhaus, Helmut, Dr., 46535 Dinslaken (DE)
(74) Vertreter: Gesthuysen, von Rohr & Eggert

(56) Entgegenhaltungen:
- DE-A- 4 423 169
- DE-A- 19 621 132
- GB-A- 1 014 754
- US-A- 4 283 958

## Beschreibung

Die Erfindung betrifft ein magnetisch-induktives Durchflußmeßverfahren zur Messung des Durchflusses eines strömenden Mediums durch ein Meßrohr, das zwei entlang einer zumindest im wesentlichen senkrecht zur Meßrohrachse verlaufenden Verbindungslinie angeordnete Meßelektroden aufweist, wobei ein zumindest im wesentlichen senkrecht zur Meßrohrachse und senkrecht zur Verbindungslinie der Meßelektroden verlaufendes Magnetfeld erzeugt wird und zur Bestimmung des Durchflusses des strömenden Mediums durch das Meßrohr an einer Meßelektrode oder an beiden Meßelektroden jeweils eine Spannung gegenüber einem Referenzpotential abgegriffen wird.

Magnetisch-induktive Durchflußmeßverfahren der eingangs genannten Art sind schon seit längerer Zeit gut bekannt und werden vielfältig in unterschiedlichen Einsatzgebieten verwendet. Das grundlegende Prinzip eines magnetisch-induktiven Durchflußmeßgeräts für strömende Medien geht dabei bereits auf Faraday zurück, der im Jahre 1832 vorgeschlagen hat, das Prinzip der elektrodynamischen Induktion zur Strömungsgeschwindigkeitsmessung anzuwenden. Nach dem Farraday'schen Induktionsgesetz entsteht in einem strömenden Medium, welches Ladungsträger mit sich führt und durch ein Magnetfeld hindurch fließt, eine elektrische Feldstärke senkrecht zur Strömungsrichtung und senkrecht zum Magnetfeld. Das Faraday'sche Induktionsgesetz wird bei einem magnetisch-induktiven Durchflußmeßgerät dadurch ausgenutzt, daß ein Magnet, im allgemeinen bestehend aus zwei Magnetpolen mit je einer Magnetspule, ein Magnetfeld senkrecht zur Strömungsrichtung in dem Meßrohr erzeugt. Innerhalb dieses Magnetfelds liefert jedes sich durch das Magnetfeld bewegende und eine gewisse Anzahl von Ladungsträgern aufweisende Volumenelement des strömenden Mediums mit der in diesem Volumenelement entstehenden Feldstärke einen Beitrag zu einer über Meßelektroden abgreifbaren Meßspannung. Die Meßelektroden werden bei den bekannten magnetisch-induktiven Durchflußmeßgeräten derart ausgeführt, daß sie entweder galvanisch oder kapazitiv mit dem strömenden Medium gekoppelt sind. Ein besonderes Merkmal der magnetisch-induktiven Durchflußmeßgeräte ist schließlich die Proportionalität zwischen der Meßspannung und der über den Querschnitt des Meßrohrs gemittelten Strömungsgeschwindigkeit des Mediums, d. h. zwischen Meßspannung und Volumenstrom.

Im eigentlichen Durchflußmeßbetrieb wird bei dem magnetisch-induktiven Durchflußmeßverfahren im allgemeinen das Magnetfeld zeitlich alternierend umgeschaltet. Aus dem Stand der Technik sind dazu unterschiedliche Vorgehensweisen bekannt. Eine magnetisch-induktive Durchflußmessung ist z. B. mit einem Wechselfeld möglich, wobei typischerweise die Magnetspulen des Magneten direkt vom Stromnetz mit einer sinusförmigen 50-Hz-Wechselspannung gespeist werden. Die aufgrund der Strömung erzeugte Meßspannung zwischen den Meßelektroden wird dabei jedoch durch transformatorische Störspannungen sowie Netzstörspannungen überlagert.

Heutzutage wird daher bei magnetisch-induktiven Durchflußmessungen im allgemeinen mit einem geschalteten Gleichfeld gearbeitet. Ein solches geschaltetes Gleichfeld erhält man, indem den Magnetspulen des Magneten ein Strom mit zeitlich rechteckförmigem Verlauf zugeführt wird, der seine Polarität zeitlich alternierend ändert. Möglich ist jedoch auch eine magnetisch-induktive Durchflußmessung mit Hilfe eines pulsierenden Gleichfeldes, das dadurch erhalten wird, daß die Magnetspulen des Magneten nur periodenweise mit einem zeitlich rechteckförmigen, immer die gleiche Polarität aufweisenden Strom versorgt werden. Ein Verfahren, bei dem der Feldstrom periodisch umgepolt wird ist jedoch bevorzugt, da durch die Änderung der Polarität des Magnetfelds Störgrößen, wie elektrochemische Störgrößen, unterdrückt werden können.

Bei der Verwendung eines umpolbaren geschalteten Gleichfelds muß nach dem Umschalten abgewartet werden, bis sich das Magnetfeld stabilisiert hat. Danach wird die Meßspannung, also z. B. die Differenzspannung zwischen den Elektroden, aufintegriert, bis der Feldstrom wieder in die umgekehrte Polarität umgeschaltet wird. Das Abwarten bis das Magnetfeld eingeschwungen ist, ist wichtig, um eine gute Meßgenauigkeit zu erzielen. Aus der EP 0 809 089 A2 ist es bekannt, daß auch das Meßsignal während der Einschwingphase des Magnetfelds verwendet werden kann. Dies ist jedoch nicht einfach zu realisieren, und außerdem ist das Meßsignal in der Einschwingphase geringer als im eingeschwungenen Zustand, da das Meßsignal grundsätzlich proportional zum Magnetfeld ist.

In der DE 44 23 169 A ist die Variation der Länge der Intervalle eines zeitlich alternierenden Rechtecksignals (unabhängig vom gemessenen Durchfluss) und die Ermittlung Nullpunktkorrektur- sowie Korrekturfaktorwerte aus dem Vergleich der gewonnenen Daten kurzer und langer Messintervalle beschrieben. Gemäß einer Ausführungsform erfolgt bei geringen Durchflusswerten die Korrektur mit dem Nullpunktkorrekturwert, bei hohen mit dem Korrekturfaktor.

Besondere Probleme treten bei magnetisch-induktiven Durchflußmeßverfahren insbesondere dann auf, wenn relativ schnelle Abfüllvorgänge gemessen werden sollen. Ein Abfüllvorgang besteht im wesentlichen aus drei Bereichen, nämlich dem Beginn der Abfüllung, der durch einen steigenden Durchfluß gekennzeichnet ist, einem darauffolgenden konstanten Durchfluß und schließlich dem Ende der Abfüllung, das durch einen abnehmenden Durchfluß gekennzeichnet ist, der typischerweise auf Null zurückgeht. In der Praxis beträgt bei schnellen Abfüllungen der erste Bereich, also der Beginn der Abfüllung, zwischen 20 und 100 ms. Danach liegt ein konstanter Durchfluß für eine Zeitdauer zwischen typischerweise 0,5 bis 10 s vor.

Problematisch ist nun, daß sich bei schnellen Abfüllvorgängen die Einschwingphase des Magnetfeldes negativ auf die Meßgenauigkeit auswirkt, da es sich bei den Einschwingphasen um Zeitintervalle handelt, in denen nicht oder zumindest nicht sehr genau gemessen werden kann. Dies ist gerade bei Beginn der Abfüllung kritisch, da hier eine hohe Änderungsgeschwindigkeit des Durchflusses vorliegt. Beginnt gerade in dieser Einschwingphase des Magnetfeldes ein Abfüllvorgang, so kann keine oder nur eine ungenaue Aussage über das durchgeflossene Volumen gemacht werden. Im Gegensatz dazu ist bei konstantem Durchfluß ein Fehler durch die Einschwingphase des Magnetfeldes unproblematisch, da hier gut mit Interpolationen gearbeitet werden kann.

Damit liegt der Erfindung die Aufgabe zugrunde, ein solches magnetisch-induktives Durchflußmeßverfahren anzugeben, mit dem auch schnelle Abfüllvorgänge mit hoher Genauigkeit gemessen werden können.

Das magnetisch-induktive Durchflußmeßverfahren, mit dem die zuvor hergeleitete und aufgezeigte Aufgabe gelöst ist, ist dadurch gekennzeichnet, daß der Durchflußmeßbetrieb mit zeitlich alternierendem Magnetfeld aufgenommen wird, sobald ein zunehmender Durchfluß erfaßt wird.

Dies bedeutet, daß der Durchflußmeßbetrieb, bei dem ein Umschalten des Magnetfelds erfolgt, so daß die zuvor erläuterte Problematik des Einschwingen des Magnetfelds vorliegt, erst dann erfolgt, wenn durch die Erfassung eines zunehmenden Durchflusses der Beginn eines Abfüllvorgangs erkannt wird. Gemäß der Erfindung ist vorgesehen, daß das Magnetfeld im Durchflußmeßbetrieb zeitlich alternierend umgeschaltet wird, wobei es besonders bevorzugt ist, ein geschaltetes, umpolbares Gleichfeld zu verwenden.

Solange ein konstanter Durchfluß erfaßt wird, wird kein Durchflußmeßbetrieb mit zeitlich alternierendem Magnetfeld aufgenommen. Dabei ist es gemäß einer bevorzugten Weiterbildung der Erfindung vorgesehen, daß das Magnetfeld konstant gehalten wird, solange ein konstanter Durchfluß erfaßt wird. "Konstant halten" heißt dabei, daß das Magnetfeld jedenfalls nicht zeitlich alternierend umgeschaltet wird, wie im Durchflußmeßbetrieb. "Konstant halten" heißt also insbesondere, daß das Magnetfeld jedenfalls im Vergleich zum Meßbetrieb über deutlich längere Zeiten konstant gehalten wird. Ein solches Konstanthalten des Magnetfelds soll erfolgen, solange ein konstanter Durchfluß erfaßt wird. Im allgemeinen wird es sich natürlich bei dem konstanten Durchfluß, bei dem das Magnetfeld konstant gehalten wird, um einen Durchfluß von konstant Null handelt.

Schließlich sei darauf hingewiesen, daß bei konstantem Magnetfeld ein Durchfluß des strömenden Mediums durch das Meßrohr über die Erfassung einer Differenzspannung zwischen den Meßelektroden grundsätzlich erfaßbar ist, dies jedoch keinen Durchflußmeßbetrieb mit zeitlich alternierendem Magnetfeld im Sinne der Erfindung darstellt. Bei konstantem Magnetfeld ist jedoch eine Aussage, nämlich sogar eine quantitative Aussage, über einen Anstieg des Magnetfelds möglich, der von einem zunehmenden Durchfluß herrührt.

Das magnetisch-induktive Durchflußmeßverfahren ist vorzugsweise weiterhin derart ausgestaltet, daß der Durchflußmeßbetrieb mit zeitlich alternierendem Magnetfeld beendet wird, sobald der für den Durchfluß erfaßte Wert unter einen vorbestimmten Mindestwert gefallen ist. Bei zeitlich alternierend umgeschaltetem Magnetfeld erfolgt also ein Wechsel zu einem konstanten Magnetfeld dann, wenn der für den Durchfluß erfaßte Wert unter einen vorbestimmten Mindestwert gefallen ist.

Für die Erfassung des Durchflusses zur Steuerung des Magnetfelds in der oben beschriebenen Weise ist es grundsätzlich möglich, sich eines zusätzlichen Durchflußmeßgeräts zu bedienen. Gemäß einer bevorzugten Weiterbildung der Erfindung ist jedoch vorgesehen, daß die Erfassung des Durchflusses zur Steuerung des Magnetfeldes mittels des magnetisch-induktiven Durchflußmeßgeräts selbst erfolgt, auf dem das erfindungsgemäße magnetisch-induktive Durchflußmeßverfahren implementiert ist.

Weiterhin ist gemäß einer bevorzugten Weiterbildung der Erfindung vorgesehen, daß die Erfassung des Durchflusses mit einer vorbestimmten Abtastrate erfolgt. Bei konstantem Magnetfeld erhaltene, zeitlich aufeinanderfolgende Abtastwerte für den Durchfluß können dann miteinander verglichen werden, und ab einer einen vorbestimmten Schwellwert überschreitenden Änderung der Abtastwerte für den Durchfluß wird das Magnetfeld dann zeitlich alternierend umgeschaltet. Insbesondere kann gemäß einer bevorzugten Weiterbildung der Erfindung vorgesehen sein, jeweils zwei, bei konstantem Magnetfeld erhaltene, zeitlich aufeinanderfolgende Abtastwerte für den Durchfluß mit + 1 bzw. - 1 zu multiplizieren, aus diesen mit + 1 bzw. mit - 1 multiplizierten Abtastwerten für den Durchfluß einen Mittelwert für den Durchfluß zu bestimmen und sobald der Mittelwert für den Durchfluß einen vorbestimmten Schwellwert überschreitet, das Magnetfeld zeitlich alternierend umzuschalten. Damit wird der weiter oben schon angesprochene Effekt ausgenutzt, daß bei konstantem Magnetfeld zwar insbesondere aufgrund von elektrochemischen Störgrößen keine genaue Durchflußmessung möglich ist, also kein eigentlicher Durchflußmeßbetrieb erfolgen kann, jedoch durchaus und sogar quantitativ erfaßbar ist, ob es zu einer bestimmten Zunahme des Durchflusses, entsprechend dem Beginn eines Abfüllvorgangs, kommt.

Wird der Durchfluß bzw. die Änderung des Durchflusses mit einer vorbestimmten Abtastrate erfaßt, so ist gemäß einer bevorzugten Weiterbildung der Erfindung vorgesehen, daß die vorbestimmte Abtastrate außerhalb des Durchflußmeßbetriebs mit zeitlich alternierendem Magnetfeld höher ist als die vorbestimmte Abtastrate im Durchflußmeßbetrieb. Dies bedeutet konkret, daß die Abtastrate bei konstantem Magnetfeld höher ist als die Abtastrate bei zeitlicher alternierend umgeschaltetem Magnetfeld. Bei zeitlich alternierend umgeschaltetem Magnetfeld ist die Abtastrate durch die Umschaltfrequenz des Magnetfelds gegeben, es erfolgt nämlich pro Halbperiode ein einmaliges Abtasten des Magnetfelds durch Aufintegrieren der Signalspannung nach der Einschwingzeit des Magnetfelds. Wenn vorgesehen ist, daß die Abtastrate außerhalb des Durchflußmeßbetriebs mit zeitlich alternierendem Magnetfeld größer ist als im Durchflußmeßbetrieb, so ist es besonders bevorzugt, daß die Abtastrate außerhalb des Durchflußmeßbetriebs ein ganzzahliges Vielfaches der Abtastrate im Durchflußmeßbetrieb ist. Wesentlich ist dabei, daß die Abtastrate außerhalb des Meßbetriebs nicht von dem Einschwingvorgang des Magnetfelds abhängt, da das Magnetfeld konstant ist. Je höher die Abtastrate außerhalb des Durchflußmeßbetriebs ist, um so genauer kann der Beginn eines Abfüllvorgangs erfaßt werden. Eine Begrenzung der Abtastrate findet sich dabei nicht mehr in der Frequenz des umgeschalteten Magnetfelds sondern lediglich in der Qualität der einbezogenen Elektronik, insbesondere des für die Digitalisierung der Meßspannung vorgesehenen A/D-Wandlers.

Im einzelnen gibt es nun eine Vielzahl von Möglichkeiten, das erfindungsgemäße magnetisch-induktive Durchflußmeßverfahren auszugestalten und weiterzubilden. Dazu wird auf die dem Patentanspruch 1 nachgeordneten Patentansprüche sowie auf die nachfolgende detaillierte Beschreibung eines bevorzugten Ausführungsbeispiels der Erfindung unter Bezugnahme auf die Zeichnung verwiesen. In der Zeichnung zeigt
- Fig. 1: schematisch ein magnetisch-induktives Durchflußmeßgerät zur Durchführung des magnetisch-induktiven Durchflußmeßverfahrens gemäß einem bevorzugten Ausführungsbeispiel der Erfindung und
- Fig. 2: schematisch den Ablauf des magnetisch-induktiven Durchflußmeßverfahrens gemäß dem bevorzugten Ausführungsbeispiel der Erfindung.

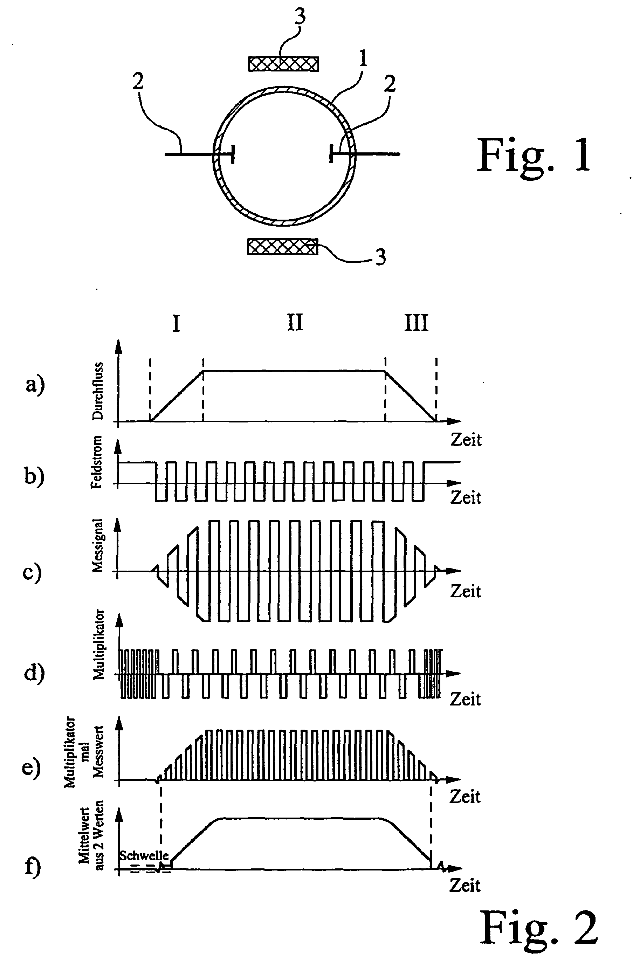

Aus Fig. 1 ist ein magnetisch-induktives Durchflußmeßgerät zur Durchführung des nachfolgend beschriebenen magnetisch-induktiven Durchflußmeßverfahrens gemäß einem bevorzugten Ausführungsbeispiel der Erfindung ersichtlich. Das magnetisch-induktive Durchflußmeßgerät weist ein Meßrohr 1 auf, durch das ein nicht weiter dargestelltes Medium strömt. Ferner sind zwei Meßelektroden 2 vorgesehen, mit denen eine in dem durch das Meßrohr 1 strömenden Medium induzierte Meßspannung erfaßbar ist. Zur Erzeugung eines senkrecht zur Meßrohrachse und senkrecht zur Verbindungslinie der Meßelektroden 2 verlaufenden Magnetfelds dienen zwei Magnetspulen 3.

Der Ablauf des magnetisch-induktiven Durchflußmeßverfahrens gemäß dem bevorzugten Ausführungsbeispiel der Erfindung ist nun schematisch in Fig. 2 dargestellt. Fig. 2 a zeigt, stark vereinfacht, den grundsätzlichen Verlauf eines Abfüllvorgangs. In einem ersten mit I bezeichneten Bereich, der den Beginn der Abfüllung darstellt, steigt der Durchfluß von Null auf einen konstanten Wert an. Darauf folgt der mit II bezeichnete Bereich, in dem ein konstanter Durchfluß vorliegt. Mit III ist schließlich der Bereich des Endes der Abfüllung bezeichnet, in dem der Durchfluß von dem konstanten Wert auf Null zurückgeht. Der zeitliche Verlauf des Durchflusses im Bereich I bzw. III ist linear dargestellt und damit sehr vereinfacht. In der Praxis sind wesentlich komplexere Kurvenformen möglich, wobei natürlich grundsätzlich gilt, daß es im Bereich I zu einem Anstieg und in dem Bereich III zu einem Abfall des Durchflusses kommt. Der in Fig. 2 a gezeigter Abfüllvorgang weist in der Praxis bei schnellen Abfüllungen eine Gesamtdauer von insgesamt typischerweise bis zu ca. 10 s auf. Der wesentliche Anteil davon wird durch den konstanten Durchfluß im Bereich II eingenommen, wobei der Beginn der Abfüllung, Bereich I, eine Zeitdauer von typischerweise 20 bis 100 ms aufweist.

Wie nun aus Fig. 2b ersichtlich, wird der Feldstrom, mit dem die Magnetspulen 3 gespeist werden, zuerst konstant gehalten. Erst zu Beginn des Bereichs I, also mit Beginn der Abfüllung, wird der Durchflußmeßbetrieb aufgenommen, in dem das Magnetfeld zeitlich alternierend umgeschaltet wird. Konkret ist, wie Fig. 2b entnehmbar, ein geschaltetes Gleichfeld vorgesehen, dessen Polarität periodisch umgeschaltet wird. Damit ergibt sich als Meßsignal, also als zwischen den Meßelektroden 2 abgenommene Meßspannung, ein Verlauf, wie in Fig. 2c dargestellt. Um aus diesem Meßsignal einen Wert für den Durchfluß des strömenden Mediums durch das Meßrohr 1 hindurch zu erhalten, erfolgt eine Multiplikation mit einem aus Fig. 2d ersichtlichen Multiplikator, so daß sich ein Verlauf, wie in Fig. 2 e gezeigt, ergibt. Ein kontinuierliches Signal, entsprechend dem tatsächlichen Durchfluß, ergibt sich daraus durch Interpolation zwischen den einzelnen Halbperioden bzw. durch Mittelwertbildung, siehe Fig. 2 f.

Der Multiplikator beträgt entweder + 1 oder - 1 und ist zeitlich zu vorbestimmten Abtastzeiten "aktiv". Im eigentlichen Durchflußmeßbetrieb, also während des zeitlich alternierenden Umschaltens des Magnetfelds, ist der Multiplikator in jeder Halbperiode des Magnetfelds "aktiv", nachdem sich dieses auf einen im wesentlichen konstanten Wert eingeschwungen hat. Dabei entspricht die Abtastrate, also die Frequenz des Multiplikators, gerade der Frequenz, mit der das Magnetfeld periodisch umgepolt wird.

Vor der Aufnahme des Meßbetriebs mit zeitlich alternierendem Magnetfeld, also vor dem Bereich I, gilt zwar auch, daß der Multiplikator periodisch wechselnd die Werte + 1 und - 1 annimmt, jedoch ist die Abtastrate wesentlich höher, vorliegend nämlich viermal so hoch. Konkret beträgt nämlich die Feldfrequenz, also die Frequenz, mit der das Gleichfeld im Durchflußmeßbetrieb mit zeitlich alternierendem Magnetfeld periodisch umgeschaltet wird, bei dem vorliegend beschriebenen bevorzugten Ausführungsbeispiel der Erfindung 25 Hz, während vor dem Beginn des eigentlichen Meßbetriebs, also bei Vorliegen eines konstanten Magnetfelds, eine Abtastfrequenz von 100 Hz verwendet wird.

Es erfolgt also vor dem Durchflußmeßbetrieb mit zeitlich alternierendem Magnetfeld eine relativ hochfrequente Abtastung, so daß eine Änderung des Durchflusses, die bei dem vorliegend beschriebenen magnetisch-induktiven Durchflußmeßverfahren gemäß dem bevorzugten Ausführungsbeispiel der Erfindung als Hinweis auf einen beginnenden Abfüllvorgang verwendet wird, zeitlich sehr genau erfaßt werden kann. Der Beginn des Durchflußmeßbetriebs mit zeitlich alternierendem Magnetfeld wird dabei dadurch bestimmt, daß bei konstantem Magnetfeld jeweils zwei zeitlich aufeinanderfolgende zwischen den beiden Meßelektroden 2 abgegriffenen Abtastwerte des Meßsignals mit + 1 bzw. - 1 multipliziert werden, aus diesen mit + 1 bzw. mit - 1 multiplizierten Abtastwerten für den Durchfluß ein Mittelwert für den Durchfluß bestimmt wird und sobald der Mittelwert für den Durchfluß einen vorbestimmten Schwellwert überschreitet, der eigentliche Meßbetrieb aufgenommen wird, indem das Magnetfeld zeitlich alternierend umgeschaltet wird.

## Patentansprüche

1. Magnetisch-induktives Durchflußmeßverfahren zur Messung des Durchflusses eines strömenden Mediums durch ein Meßrohr (1), das zwei entlang einer zumindest im wesentlichen senkrecht zur Meßrohrachse verlaufenden Verbindungslinie angeordnete Meßelektroden (2) aufweist, wobei ein zumindest im wesentlichen senkrecht zur Meßrohrachse und senkrecht zur Verbindungslinie der Meßelektroden (2) verlaufendes Magnetfeld erzeugt wird und zur Bestimmung des Durchflusses des strömenden Mediums durch das Meßrohr an einer Meßelektrode (2) oder an beiden Meßelektroden (2) jeweils eine Spannung gegenüber einem Referenzpotential abgegriffen wird, **dadurch gekennzeichnet, daß** das Magnetfeld konstant gehalten wird, solange ein konstanter Durchfluß von Null erfaßt wird, und ein Durchflußmeßbetrieb aufgenommen wird, bei dem das Magnetfeld zeitlich alternierend umgeschaltet wird, sobald ein zunehmender Durchfluß erfaßt wird.

2. Magnetisch-induktives Durchflußmeßverfahren nach Anspruch 1, **dadurch gekennzeichnet, daß** der Durchflußmeßbetrieb bei dem das Magnetfeld zeitlich alternierend umgeschaltet wird, beendet wird, sobald der für den Durchfluß erfaßte Wert unter einen vorbestimmten Mindestwert gefallen ist.

3. Magnetisch-induktives Durchflußmeßverfahren nach Anspruch 1 oder 2, **dadurch gekennzeichnet, daß** die Erfassung des Durchflusses mittels des magnetisch-induktiven Durchflußmeßgeräts selbst erfolgt, auf dem das magnetisch-induktive Durchflußmeßverfahren abläuft.

4. Magnetisch-induktives Durchflußmeßverfahren nach Anspruch 3, **dadurch gekennzeichnet, daß** die Erfassung des Durchflusses mit einer vorbestimmten Abtastrate erfolgt, bei konstantem Magnetfeld erhaltene, zeitlich aufeinanderfolgende Abtastwerte für den Durchfluß miteinander verglichen werden und ab einer einen vorbestimmten Schwellwert überschreitenden Änderung der Abtastwerte für den Durchfluß das Magnetfeld zeitlich alternierend umgeschaltet wird.

5. Magnetisch-induktives Durchflußmeßverfahren nach Anspruch 3, **dadurch gekennzeichnet, daß** die Erfassung des Durchflusses mit einer vorbestimmten Abtastrate erfolgt, jeweils zwei, bei konstantem Magnetfeld erhaltene, zeitlich aufeinanderfolgende Abtastwerte für den Durchfluß mit + 1 bzw. - 1 multipliziert werden, aus diesen mit + 1 bzw. mit - 1 multiplizierten Abtastwerten für den Durchfluß ein Mittelwert für den Durchfluß bestimmt wird und sobald der Mittelwert für den Durchfluß einen vorbestimmten Schwellwert überschreitet, das Magnetfeld zeitlich alternierend umgestaltet wird.

6. Magnetisch-induktives Durchflußmeßverfahren nach einem der Ansprüche 3 bis 5, **dadurch gekennzeichnet, daß** die vorbestimmte Abtastrate außerhalb des Durchflußmeßbetriebs bei dem das Magnetfeld zeitlich alternierend umgeschaltet wird, höher ist als die vorbestimmte Abtastrate in diesem Durchflußmeßbetrieb.

7. Magnetisch-induktives Durchflußmeßverfahren nach Anspruch 6, **dadurch gekennzeichnet, daß** die Abtastrate außerhalb des Durchflußmeßbetriebs bei dem das Magnetfeld zeitlich alternierend umgeschaltet wird, ein ganzzahlige Vielfaches der Abtastrate in diesem Durchflußmeßbetrieb ist.

## Claims

1. Magnetoinductive flow measuring method for measuring the flow rate of a medium flowing through a measuring tube (1) that incorporates two measuring electrodes (2) positioned along a connecting line extending in an essentially perpendicular direction relative to the measuring tube axis, wherein a magnetic field is generated that extends at least in an essentially perpendicular direction relative to the measuring tube axis and to the connecting line of the measuring electrodes (2) and wherein the flow rate of the medium moving through the measuring tube is determined by measuring the voltage, respectively collected, at one or both measuring electrodes (2) in comparison with a reference voltage potential, **characterized in that** the magnetic field is kept constant as long as a constant flow of zero is detected and the flow measuring operation is initiated in which the magnetic field is reversed in periodically alternating fashion upon detection of an increased flow rate.

2. The magnetoinductive flow measuring method according to claim 1, **characterized in that** the flow measuring operation in which the magnetic field is reversed in periodically alternating fashion is terminated as soon as the flow rate value measured drops below a predefined minimum level.

3. The magnetoinductive flow measuring method according to claim 1 or 2, **characterized in that** the acquisition of the flow rate value used to control the magnetic field is performed by the same magnetoinductive flowmeter that is employed for the magnetoinductive flow measuring process.

4. The magnetoinductive flow measuring method according to claim 3, **characterized in that** the acquisition of the flow rate takes place at a predefined sampling rate, consecutive flow rate sampling values obtained with a constant magnetic field are compared with one another, and a change of the flow rate sampling values that exceed a predefined threshold value triggers the periodically alternating reversal of the magnetic field.

5. The magnetoinductive flow measuring method according to claim 3, **characterized in that** the acquisition of the flow rate takes place at a predefined sampling rate, each two consecutive flow rate sampling values obtained with a constant magnetic field are multiplied by +1 or -1, from these sampling values multiplied by +1 or -1 al flow rate mean value is determined and, as soon as said flow rate mean value exceeds a predefined threshold value, the magnetic field is reversed in periodically alternating fashion.

6. The magnetoinductive flow measuring method according to claim 3, **characterized in that** the predefined sampling rate outside the flow measuring operation in which the magnetic field is reversed in periodically alternating fashion is higher than the sampling rate during the flow measuring operation.

7. The magnetoinductive flow measuring method according to claim 3, **characterized in that** the sampling rate outside the flow measuring operation in which the magnetic field is revered in periodically alternating fashion is an integral multiple of the sampling rate during this flow measuring operation.

## Revendications

1. Procédé de mesure magnéto-inductive du débit pour mesurer le débit d'un fluide qui s'écoule à travers un tube de mesure (1), lequel présente deux électrodes de mesure (2) disposées le long d'une ligne de liaison qui s'étend au moins pour l'essentiel perpendiculairement à l'axe du tube de mesure, un champ magnétique qui s'étend au moins pour l'essentiel perpendiculairement à l'axe du tube de mesure et perpendiculairement à la ligne de liaison des électrodes de mesure (2) étant généré et une tension étant respectivement prélevée par rapport à un potentiel de référence sur une électrode de mesure (2) ou sur les deux électrodes de mesure (2) en vue de déterminer le débit du fluide qui s'écoule à travers le tube de mesure, **caractérisé en ce que** le champ magnétique est maintenu constant tant qu'un débit constant égal à zéro est détecté et un mode de mesure du débit, dans lequel le champ magnétique est inversé périodiquement, est adopté dès qu'un débit croissant est détecté.

2. Procédé de mesure magnéto-inductive du débit selon la revendication 1, **caractérisé en ce que** le mode de mesure du débit, dans lequel le champ magnétique est inversé périodiquement, prend fin dès que la valeur détectée du débit a chuté au-dessous d'une valeur minimale prédéfinie.

3. Procédé de mesure magnéto-inductive du débit selon la revendication 1 ou 2, **caractérisé en ce que** la détection du débit s'effectue au moyen de l'appareil de mesure magnéto-inductive du débit lui-même sur lequel se déroule le procédé de mesure magnéto-inductive du débit.

4. Procédé de mesure magnéto-inductive du débit selon la revendication 3, **caractérisé en ce que** la détection du débit s'effectue à une fréquence d'échantillonnage prédéfinie, des valeurs échantillonnées chronologiques du débit, obtenues avec un champ magnétique constant, sont comparées entre elles et le champ magnétique est inversé périodiquement à partir d'une modification qui dépasse une valeur de seuil prédéfinie des valeurs échantillonnées du débit.

5. Procédé de mesure magnéto-inductive du débit selon la revendication 3, **caractérisé en ce que** la détection du débit s'effectue à une fréquence d'échantillonnage prédéfinie, deux valeurs échantillonnées chronologiques du débit, obtenues avec un champ magnétique constant, sont respectivement multipliées par +1 ou par -1, une valeur moyenne du débit est déterminée à partir de ces valeurs échantillonnées du débit multipliées par +1 ou par -1 et le champ magnétique est inversé périodiquement dès que la valeur moyenne du débit dépasse une valeur de seuil prédéfinie.

6. Procédé de mesure magnéto-inductive du débit selon l'une des revendications 3 à 5, **caractérisé en ce que** la fréquence d'échantillonnage prédéfinie, en dehors du mode de mesure du débit dans lequel le champ magnétique est inversé périodiquement, est supérieure à la fréquence d'échantillonnage prédéfinie dans ce mode de mesure du débit.

7. Procédé de mesure magnéto-inductive du débit selon la revendication 6, **caractérisé en ce que** la fréquence d'échantillonnage, en dehors du mode de mesure du débit dans lequel le champ magnétique est inversé périodiquement, est un multiple entier de la fréquence d'échantillonnage dans ce mode de mesure du débit.
